Europäisches Patentamt

**European Patent Office**

**Office européen des brevets**

(11) Veröffentlichungsnummer: **0 188 794**
**B1**

(12) **EUROPÄISCHE PATENTSCHRIFT**

(45) Veröffentlichungstag der Patentschrifft:
21.03.90

(51) Int. Cl.⁵: **G 11 B 15/02**

(21) Anmeldenummer: 85116414.5

(22) Anmeldetag: 21.12.85

(54) **Bedienfeld für ein Magnetbandgerät.**

(30) Priorität: 10.01.85 DE 3500540

(43) Veröffentlichungstag der Anmeldung:
30.07.86 Patentblatt 86/31

(45) Bekanntmachung des Hinweises auf die Patenterteilung:
21.03.90 Patentblatt 90/12

(84) Bennante Vertragsstaaten:
DE GB IT NL

(56) Entgegenhaltungen:
BE-A-886 249
DE-A-2 837 791
DE-A-3 222 487
DE-A-3 230 713
US-A-3 947 894
US-A-4 434 443

JOURNAL OF THE AUDIO ENGINEERING SOCIETY, Band 31, Nr. 12, Dezember 1983, Seiten 921-930, New York, US; O.J. BONELLO: "A new tape transport system with digital control"

IBE INTERNATIONAL BROADCAST ENGINEER, Band 12, Nr. 176, März 1981, Seiten 28,29, Eton, Berkshire, GB; S. RABIN: "The NEC CTT-7000"

JEE JOURNAL OF ELECTRONIC ENGINEERING, Band 21, Nr. 207, März 1984, Seiten 76-79, Tokyo, JP; T. SUZUKI: "A multiple-function audio deck for broadcasting stations"

(73) Patentinhaber: Licentia Patent-Verwaltungs-GmbH
Theodor-Stern-Kai 1
D-6000 Frankfurt/Main 70 (DE)

(72) Erfinder: Barth, Rüdiger
Obere Rheinstrasse 34
D-7752 Insel Reichenau (DE)

(74) Vertreter: Schulze, Harald Rudolf, Dipl.-Ing.
Licentia Patent-Verwaltungs-GmbH Theodor-Stern-Kai 1
D-6000 Frankfurt/Main 70 (DE)

(56) Entgegenhaltungen (fortsetzung):
GRUNDIG TECHNISCHE INFORMATIONEN, Band 25, Nr. 4, 1978, Seiten 241-248, Fürth, DE; W. RÄBIGER: "Automatisches Schneidesystem ASS600 als Beispiel für die Vielseitigkeit des Videorecorders VCR601"

EP 0 188 794 B1

## Beschreibung

Die Erfindung betrifft ein Bedienfeld für ein Magnetbandgerät nach dem Oberbegriff des Anspruchs 1. Ein solches Gerät ist beschrieben in einem Beitrag von T. Suzuki "A Multiple-Function Audio Deck for Broadcasting Stations", erschienen in: Journal of Electronic Enginering, Band 21, Nr. 207, März 1984, Tokyo, Japan Seiten 76 - 79.

Ein Studio-Magnetbandgerät ist im Produktions-Rundfunk oder -Fernsehen und in der Musikproduktion ein Arbeitsgerät, das neben der Grundforderung, Tonaufzeichnung mit höchster Qualität zu gewährleisten, große Anforderungen an die leichte Bedienbarkeit stellt. Der Toningenieur soll sich per Definition seiner Aufgabenstellung auf die Richtigkeit und Qualität der Aufzeichnung konzentrieren und nicht auf die Bedienung des Arbeitsgeräts.

Aufgabe der Erfindung ist es, ein Bedienfeld der eingangs genannten Art anzugeben, welches der Bedienperson Handgriffe erspart und die Anforderungen an die Konzentration bei der Bedienung herabsetzt.

Die Lösung dieser Aufgabe ist im Patentanspruch 1 gekennzeichnet. Der Unteranspruch beinhaltet eine vorteilhafte Weiterbildung der Erfindung.

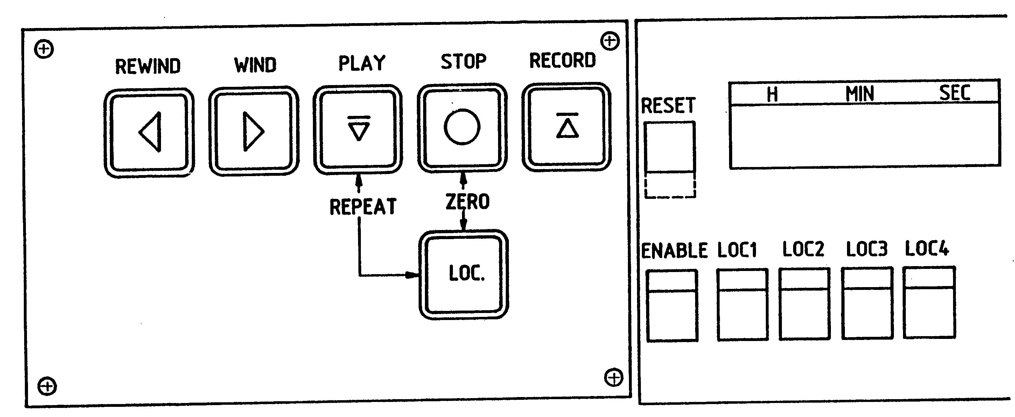

Die Erfindung wird im folgenden anhand der einzigen Figur näher erläutert. Die Figur zeigt im wesentlichen nur die für die Erfindung bedeutsamen Bedienelemente. Alle weiteren Funktionen sind der Einfachheit halber weggelassen.

Die Bedienung eines Magnetbandgerätes unterteilt sich in drei Gruppen:

1.  Reine Laufwerksbedienung (Umspulen, Wiedergabe, Aufnahme, Stop)
2.  Funktionsbestimmung Gesamtmaschine (Geschwindigkeitswahl, Entzerrungsumschaltung, Schnittbetrieb, Zählwerk, Variospeed usw.)
3.  Funktionsbestimmung auf die Spuren bezogen (Aufnahmebereitschaftsumschaltung, Sync-Betrieb, Umschaltung auf Eingang).

Bei allen Studio-Tonbandgeräten ist die Tastenanordnung für die Laufwerksbedienung durch große, leicht bedienbare Tasten gekennzeichnet. Diesem Tastenfeld wird gemäß der Erfindung eine Positionstaste mit der Bezeichnung LOC (Locate) zugeordnet, und zwar ergonomisch sinnvoll unter der Stoptaste STOP plaziert, wie in der Figur dargestellt. Bei jedem Play-Befehl bzw. Record-Befehl wird die jeweilige Bandposition abgespeichert. Bei Betätigung der Locate-Taste wird Stop- und Rückspul-Befehl erzeugt, der gleichzeitig eine Suchfunktion zur zuletzt abgespeicherten Bandposition ist. Das Magnetband wird bis zu dieser Bandposition zurückgespult.

Bei gleichzeitiger Betätigung der Positionstaste LOC und der Stoptaste wird das Magnetband gestopt und bis zur Nullposition zurückgespult.

Bei gleichzeitiger Betätigung der Positionstaste LOC und der Wiedergabetaste PLAY wird das Magnetbandgerät gestopt, zurückgespult, und läuft dann zwischen der letzten Startposition und der Stopposition im automatischen Wiederholungsbetrieb.

Die Verknüpfung der Funktionen zur Erreichung der erfindungsgemäßen Merkmale kann durch einfache logische Schaltungen oder mit einem Mikroprozessor geschehen. Beides ist dem Fachmann geläufig und braucht deshalb hier nicht näher erläutert zu werden.

Es ist bekannt, Bandpositionen abzuspeichern, aufzusuchen, die Nullposition anzufahren, oder die Wiedergabe automatisch zu wiederholen durch die Betätigung jeweils gesonderter Tasten mit den Bezeichnungen SET CUE, LOCATE CUE, LOCATE ZERO, REPEAT. Die erfindungsgemäße Positionstaste LOC spart diese vier Tasten ein. Durch ihre ergonomisch günstige Plazierung unter der Stoptaste können jeweils mit einem Handgriff verschiedene Funktionen angesteuert werden, für die nach dem Stand der Technik die Bedienung mehrerer, noch dazu weit auseinanderliegender Tasten erforderlich war.

In einer Weiterbildung der Erfindung sind zusätzlich zu der Positionstaste LOC mehrere Positionsspeichertasten LOC1 bis LOC4 vorgesehen, sowie eine diesen räumlich unmittelbar zugeordnete Entriegelungstaste ENABLE. Bei Betätigung einer der Tasten LOC1 bis LOC4 wird die gerade erreichte Bandposition abgespeichert. Bei gleichzeitiger Betätigung einer der vier Tasten und der ENABLE-Taste wird das Band gestopt und die jeweilige gespeicherte Bandposition angefahren.

## Patentansprüche

1.  Bedienfeld für ein Magnetbandgerät mit den Bedienelementen Vor- und Rückspultaste, Aufnahmetaste, Wiedergabetaste, und Stoptaste und mit einer Steuerschaltung sowie mit einem Arbeitsspeicher, dadurch gekennzeichnet,

    -   daß eine Positionstaste (LOC) unter der Stoptaste (STOP) angeordnet ist und, daß die Bedienelemente derart mit der Steuerschaltung verbunden sind, daß die Steuerschaltung:

    -   bei Betätigung der Aufnahmetaste (RECORD) oder der Wiedergabetaste (PLAY) die jeweilige Bandposition als erste Position im Arbeitsspeicher speichert;
    -   bei Betätigung der Positionstaste (LOC) das Magnetband stoppt, die im Arbeitsspeicher gespeicherte erste Position liest, und das Magnetband bis zu dieser Bandposition zurückspult;
    -   bei gleichzeitiger Betätigung der Positionstaste (LOC) und der Wiedergabetaste (PLAY) das Magnetband stoppt, die erreichte Bandposition als zweite Position speichert, die im Arbeitsspeicher gespeicherte erste Position liest und das Magnetband bis zu dieser Position zurückspult, und im automatischen Wiederholungsbetrieb zwischen der ersten Position und der zweiten Position abspielt;

— und bei gleichzeitiger Betätigung der Positionstaste (LOC) und der Stoptaste (STOP) das Magnetband stoppt und bis zur Bandposition "0" zurückspult.

2. Bedienfeld nach Anspruch 1, dadurch gekennzeichnet, daß zusätzlich zu der Positionstaste (LOC) mehrere Positionsspeichertasten (LOC1 bis LOC4) und eine Entriegelungstaste (ENABLE) vorgesehen sind, die räumlich auf dem Bedienfeld zusammengefaßt und derart mit der Steuerschaltung verbunden sind, daß dir Steuerschaltung

— bei Betätigung einer der Positionsspeichertasten (LOC1 bis LOC4) die jeweils erreichte Bandposition im Arbeitsspeicher speichert;
— und bei gleichzeitiger Betätigung einer der Positionsspeichertasten (LOC1 bis LOC4) und der Entriegelungstaste (ENABLE) das Magnetband stoppt und bis zu der durch die Betätigung einer der Positionsspeichertasten (LOC1 bis LOC4) jeweils gespeicherten Bandposition zurückspult.

## Claims

1. Operating field for a magnetic tape apparatus with the operating elements forward winding and rewinding key, record key, play key and stop key and with a control circuit as well as with a working store, characterised thereby

— that a position key (LOC) is arranged under the stop key (STOP) and that the operating elements are connected with the control circuit in such a manner that the control circuit:
— on actuation of the record key (RECORD) or of the play key (PLAY), stores the respective tape position in the working store as first position;
— on actuation of the position key (LOC), stops the magnetic tape, reads- the first position stored in the working store, and rewinds the magnetic tape up to this tape position;
— on simultaneous actuation of the position key (LOC) and of the play key (PLAY), stops the magnetic tape, stores the attained tape position as second position, reads the first position stored in the working store and rewinds the magnetic tape up to this position, and in the automatic play operation plays-back between the first position and the second position;
— and on simultaneous actuation of the position key (LOC) and of the stop key (STOP), stops the magnetic tape and rewinds up to the tape position "0".

2. Operating field according to claim 1, characterized thereby, that provided additionally to the position key (LOC) are several position store keys (LOC1 to LOC4) and a release key (ENABLE), which are spatially combined on the operating field and connected with the control circuit in such a manner that the control circuit

— on actuation of one of the position store keys (LOC1 to LOC4), stores the respectively attained tape position in the working store;
— and on simultaneous actuation of one of the position storage keys (LOC1 to LOC4) and of the release key (ENABLE), stops the magnetic tape and rewinds up to the tape position respectively stored through the actuation of one of the position store keys (LOC1 to LOC4).

## Revendications

1. Clavier de commande pour un appareil à bande magnétique, comprenant les commandes constituées par une touche d'avance et une touche de rebobinage, une touche d'enregistrement, une touche de reproduction et une touche d'arrêt, un circuit de commande ainsi qu'une mémoire de travail, caractérisé en ce:

— qu'une touche de positionnement (LOC) est disposée sous la touche d'arrêt (STOP) et que les commandes sont reliées au circuit de commande de manière que le circuit de commande:
— à l'actionnement de la touche d'enregistrement (RECORD) ou de la touche de reproduction (PLAY), mémorise la position instantanée de la bande en tant que première position dans la mémoire de travail;
— à l'actionnement de la touche de positionnement (LOC), arrête la bande magnétique, lit la première position mémorisée dans la mémoire de travail et rebobine la bande magnétique jusqu'à cette position de la bande;
— à l'actionnement simultané de la touche de positionnement (LOC) et de la touche de reproduction (PLAY), arrête la bande magnétique, mémorise la position de bande atteinte en tant que deuxième position, lit la première position mémorisée dans la mémoire de travail, rebobine la bande magnétique jusqu'à cette position et fait défiler la bande dans un mode de répétition automatique de la reproduction entre la première position et la deuxième position; et
— à l'actionnement simultané de la touche de positionnement (LOC) et de la touche d'arrêt (STOP), arrête la bande magnétique et la rebobine jusqu'à la position de bande "0".

2. Clavier de commande selon la revendication 1, caractérisé en ce que, en plus de la touche de positionnement (LOC), on a prévu plusieurs touches de mémorisation de positions (LOC1 à LOC4) et une touche de déverrouillage (ENABLE), qui sont rassemblées dans un même espace sur le clavier de commande et sont reliées au circuit de commande de manière que le circuit de commande:

- à l'actionnement d'une des touches de mémorisation de positions (LOC1 à LOC4), mémorise la position de bande atteinte á ce moment dans la mémoire de travail; et
- à l'actionnement simultané d'une des touches de mémorisation de positions (LOC1 à LOC4) et de la touche de déverrouillage (ENABLE), arrête la bande magnétique et la rebobine jusqu'à la position de bande mémorisée par l'actionnement d'une des touches de mémorisation de positions (LOC1 à LOC4).

REWIND  WIND  PLAY  STOP  RECORD

REPEAT

ZERO

LOC.

RESET

H  MIN  SEC

ENABLE  LOC1  LOC2  LOC3  LOC4